# EUROPÄISCHE PATENTSCHRIFT

(11) **EP 3 888 827 B1**
(45) Veröffentlichungstag und Bekanntmachung des Hinweises auf die Patenterteilung: **18.09.2024**
(21) Anmeldenummer: 20212448.3
(22) Anmeldetag: 08.12.2020
(51) Int. Cl.: B23B 45/14, B25H 1/00, H01F 7/20

(54) **MAGNETFUSS**
MAGNETIC BASE
BASE MAGNÉTIQUE

(30) Priorität: 01.04.2020 DE 202020101768 U
(43) Veröffentlichungstag der Anmeldung: 06.10.2021
(73) Patentinhaber: C. & E. Fein GmbH, 73529 Schwäbisch Gmünd-Bargau (DE)
(72) Erfinder: Denzel, Sergej, 73529 Schwäbisch Gmünd-Bargau (DE); Scherrenbacher, Stefan, 73529 Schwäbisch Gmünd-Bargau (DE)
(74) Vertreter: Wallinger, Michael

(56) Entgegenhaltungen:
- GB-A- 190 824 733
- US-A- 1 946 214
- US-A- 5 282 704

## Beschreibung

Die Erfindung betrifft einen Magnetfuß für eine Elektrowerkzeugmaschine, insbesondere für eine Magnetkernbohrmaschine, mit einem Grundkörper, in dem in einem Aufnahmeraum mindestens eine einen Elektromagneten bildende erste Magnetspule aufgenommen ist, deren Magnetkraft zwischen einer maximalen resultierenden Haltekraft und einer minimalen resultierenden Haltekraft schaltbar ist, wobei der Grundkörper eine erste Seite, die mit der Elektrowerkzeugmaschine koppelbar ist, und eine gegenüberliegende zweite Seite aufweist, die auf ein zu bearbeitendes Werkstück aufsetzbar ist.

Derartige Magnetfüße sind aus dem Stand der Technik bereits seit langem bekannt und werden üblicherweise dafür verwendet, Elektrowerkzeugmaschinen, wie Magnetkernbohrmaschinen, mittels Magnethaltkraft auf dem zu bearbeitenden Werkstück zu befestigen.

US 5 282 704 A offenbart einen Magnetfuß für eine Magnetkernbohrmaschine, Hierbei hat sich jedoch die Aufnahme der Spulen der Elektromagnete als nachteilig erwiesen. Diese sind nämlich in Aufnahmeräumen eingesetzt, die zuvor durch eine spanende Bearbeitung in den Grundkörper eingearbeitet werden müssen. Um eine möglichst hohe Magnethaltekraft zu erreichen, werden diese Aufnahmeräume in der Regel von der Seite her in den Grundkörper eingearbeitet, die später auch auf das Werkstück aufgesetzt wird. Die Aufnahmeräume, in die die Spulen eingesetzt sind, werden dann wieder aufwändig vergossen, um zum einen die Spulen elektrisch von dem Grundkörper zu isolieren und zum anderen ein Eindringen von Spänen in die Aufnahmeräume beziehungsweise in die Spulen selbst zu verhindern. Dies birgt jedoch das Problem, dass der Bereich der Vergussmasse im unmittelbaren Kontakt mit dem Werkstück steht, wodurch sich insbesondere am Übergang zwischen dem Vergussbereich und dem Grundkörper häufig auch Verunreinigungen wie Späne ansammeln können. Da die Vergussmasse in der Regel eine deutlich geringere Härte aufweist als das Material des Grundkörpers, nützt sich der Magnetfuß in diesem Bereich dadurch verstärkt ab.

Der vorliegenden Erfindung liegt daher die Aufgabe zugrunde, die vorgenannten Nachteile zu reduzieren und insbesondere einen Magnetfuß bereitzustellen, der weniger anfällig für Verunreinigungen und Beschädigungen ist. Zudem ist es Aufgabe der Erfindung eine verbesserte Elektrowerkzeugmaschine bereitzustellen.

Diese Aufgabe wird gemäß der Erfindung bei einem Magnetfuß nach Anspruch 1 gelöst, wobei der Aufnahmeraum derartig gestaltet ist, dass ein Einsetzen der mindestens einen Magnetspule in den Aufnahmeraum nur von der ersten Seite her möglich ist.

Hierdurch wird erreicht, dass der Magnetfuß auf der zweiten Seite, die üblicherweise auf dem zu bearbeitenden Werkstück aufgesetzt wird, eine plane Oberfläche aufweist und Späne, die bei der Bearbeitung der Werkstücke entstehen, erst gar nicht in den Bereich der vergossenen Aufnahmeräume gelangen können, wodurch Abnutzungen, die durch das Verschieben des Magnetfußes auf dem Werkstück entstehen, reduziert werden. Zudem kann hierdurch auch die Gefahr von Beschädigungen der Magnetspule selbst verringert bzw. ausgeschlossen werden.

Der Aufnahmeraum ist auf der zweiten Seite durch einen Boden begrenzt, der integral mit dem Grundkörper gebildet ist. Der Boden ist also einstückig mit dem Grundkörper gebildet, hierdurch lässt sich eine einfache Herstellung des Grundkörpers erreichen. So müssen die Aufnahmeräume lediglich von der ersten Seite her in den Grundkörper spanend eingearbeitet werden, wobei im Bereich der Aufnahmeräume der Boden stehen bleibt. Bewährt hat es sich in diesem Zusammenhang auch, dass die Dicke des Bodens des Aufnahmeraums 0,2 mm oder mehr, bevorzugt 0,3 mm oder mehr und besonders bevorzugt 0,4 mm oder mehr, und 0,8 mm oder weniger, bevorzugt 0,7 mm oder weniger und besonders bevorzugt 0,6 mm oder weniger und ganz besonders bevorzugt 0,5 mm beträgt. Hierdurch wird eine ausreichende Stabilität des Grundkörpers im Bereich des Aufnahmeraums erreicht und gleichzeitig sichergestellt, dass eine magnetische Sättigung des Bodens im Bereich des Aufnahmeraums eintritt, wodurch die eigentlich zu erwartende Abschwächung der Magnetfeldlinien aufgrund des magnetischen Kurzschlusses nur so gering ausfällt, dass die resultierende Magnetkraft lediglich sehr gering abgeschwächt wird, so dass die resultierende Magnetkraft noch ausreicht, die mit dem Magnetfuß verbundene Elektrowerkzeugmaschine auf einem Werkstück sicher zu befestigen.

Die Montage des Magnetfußes wird noch dann begünstig, wenn der Aufnahmeraum einen ringförmigen Querschnitt aufweist. Hierdurch kann die vormontierte Spule einfach in den Aufnahmeraum eingesetzt werden. Die resultierende Magnetkraft kann zudem noch dadurch verbessert werden, wenn der Aufnahmeraum ein zylinderförmiges Joch umgibt, wodurch die Magnetfeldlinien verbessert geleitet werden. Im Rahmen ist es aber auch vorgesehen, dass die Magnetspule einen rechteckigen, einen ovalen, einen polygonen oder einen oblong - also langrunden - Querschnitt aufweist. Der Aufnahmeraum und das Joch sind jeweils an die Form der Magnetspule angepasst.

Als besonders vorteilhaft hat es sich auch erwiesen, wenn der Grundkörper mehrteilig gebildet ist und einen Aufnahmekörper, in dem der Aufnahmeraum ausgebildet ist, und eine Jochplatte aufweist, die den Aufnahmeraum zu der ersten Seite hin abschließt. Hierdurch kann der Fertigungsaufwand reduziert werden, um den Grundkörper spanend zu bearbeiten. Es ist dann nämlich ausreichend, wenn lediglich aus dem Aufnahmekörper der Aufnahmeraum spanend herausgearbeitet wird. Im Rahmen der Erfindung hat es sich in diesem Zusammenhang aber auch als vorteilhaft gezeigt, wenn der Aufnahmeraum auch teilweise in die Jochplatte eingearbeitet wird. Hierdurch wird es dann letztlich möglich, den Grundkörper sehr flach zu gestalten, was einen positiven Einfluss auf die Anwendungsmöglichkeiten des Magnetfußes hat.

Um ein Eindringen von Flüssigkeit in den Magnetfuß zu verhindern hat es sich dann in diesem Zusammenhang auch als besonders günstig erwiesen, wenn zwischen dem Aufnahmekörper und der Jochplatte ein Abdichtungselement vorgesehen ist. Hierbei hat es sich dann auch bewährt, wenn das Abdichtungselement als eine Rund- oder Flachdichtung ausgebildet ist, die in korrespondierende Vertiefungen eingesetzt werden kann, die an dem Aufnahmekörper und/oder der Jochplatte ausgebildet sind. Der Aufnahmekörper und die Jochplatte werden dabei in bevorzugter Weise miteinander verschraubt. Hierfür können mehrere Schrauben verwendet werden, die von der ersten Seite her durch die Jochplatte hindurch in den Aufnahmekörper verschraubt werden. Im Rahmen der Erfindung ist es dabei auch vorgesehen, dass die Jochplatte mehrfach vorgesehen ist und in die Aufnahmeräume zumindest teilweise eingesetzt wird.

Bewährt hat es sich außerdem auch, wenn die Breite und/oder die Länge der Jochplatte im Wesentlichen der Breite und/oder der Länge des Grundkörpers entspricht. Durch die Abstimmung der Größe der beiden Bauteile zueinander wird insbesondere erreicht, dass der Grundkörper flache Seitenflächen aufweist und störende Kanten bzw. Stufen verhindert werden. Im Rahmen der Erfindung ist es aber auch vorgesehen, dass die Jochplatte kleiner als der Grundkörper ist und von der Form und Größe an den Aufnahmeraum angepasst ist. So kann die Jochplatte beispielsweise eine runde Grundform mit einem Rand bzw. Bund aufweisen, der in eine Aufnahmeschulter eingesetzt werden kann, die an dem Aufnahmekörper ausgebildet ist.

Als vorteilhaft hat es sich auch erwiesen, wenn in der Jochplatte Durchführungen ausgebildet sind. Hierdurch ist es dann letztlich möglich, die in dem Aufnahmeraum angeordnete Magnetspule mit der Elektrowerkzeugmaschine zu verbinden, um die Spule einzuschalten und damit die Magnetkraft des Magnetfußes verändern zu können.

Als besonders günstig hat es sich zudem gezeigt, wenn die mindestens eine Magnetspule in dem Aufnahmeraum vergossen ist. Hierdurch wird auf einfache aber effektive Art und Weise sichergestellt, dass die Magnetspule in dem Aufnahmeraum gesichert und gegenüber dem umgebenden Grundkörper isoliert ist. Im Rahmen der Erfindung hat es sich hierbei dann auch bewährt, wenn die zum Vergießen verwendete Vergussmasse von der ersten Seite her in den Aufnahmeraum zugeführt wird.

Bewährt hat es sich auch, wenn die mindestens eine Magnetspule mehrfach, besonders bevorzugt zweifach vorgesehen ist. Hierdurch lässt sich die resultierende Magnetkraft erhöhen. Diesbezüglich ist es im Rahmen der Erfindung auch vorgesehen, dass beide Magnetspulen in einem gemeinsamen Aufnahmeraum angeordnet sind oder dass beide Magnetspulen in jeweils einem eigenen Aufnahmeraum angeordnet sind. Die die Elektrowerkzeugmaschine betreffende Aufgabe wird gelöst durch eine Elektrowerkzeugmaschine mit einem Magnetfuß nach einem der Ansprüche 1 bis 10.

Im Folgenden wird die Erfindung an mehreren in den Zeichnungen dargestellten Ausführungsbeispielen näher erläutert; es zeigen:
- Fig. 1: einen Magnetfuß, der an einer Elektrowerkzeugmaschine befestigt ist,
- Fig. 2: einen Längsschnitt durch eine erste Ausführungsform eines Magnetfußes mit einer Detailansicht des Details A,
- Fig. 3: eine Explosionsansicht der ersten Ausführungsform des Magnetfußes aus der Figur 2,
- Fig. 4: einen Längsschnitt durch eine zweite Ausführungsform eines Magnetfußes,
- Fig. 5: eine Explosionsansicht der zweiten Ausführungsform des Magnetfußes aus der Figur 4,
- Fig. 6: einen Längsschnitt durch eine dritte Ausführungsform eines Magnetfußes, und
- Fig. 7: eine Explosionsansicht der dritten Ausführungsform des Magnetfußes aus der Figur 6.

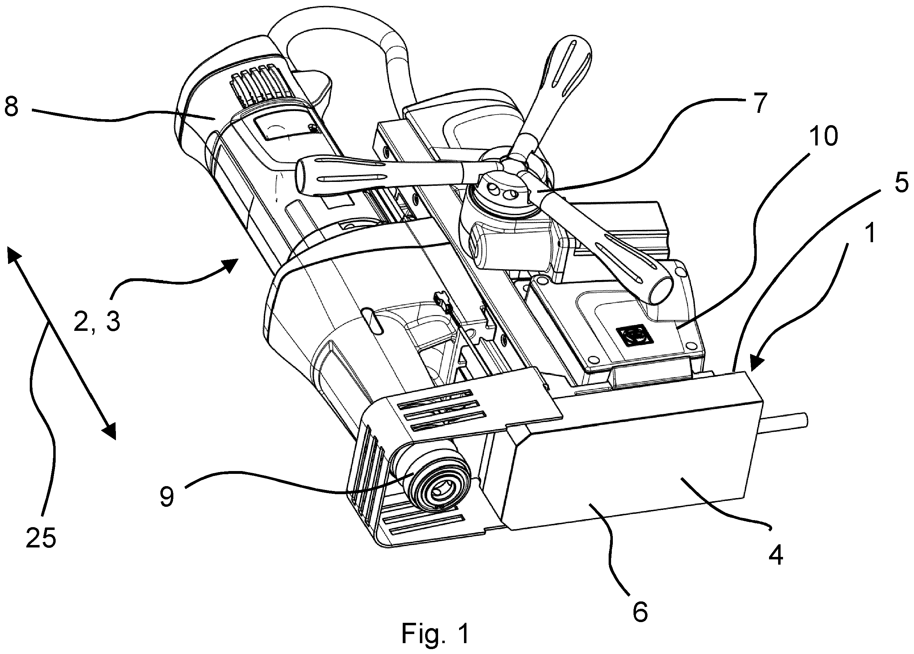

Figur 1 zeigt in einer perspektivischen Ansicht einen Magnetfuß 1, der an einer Elektrowerkzeugmaschine 2, im vorliegenden Beispiel an einer Magnetkernbohrmaschine 3, befestigt ist. Der Magnetfuß 1 weist dabei einen Grundkörper 4 mit einer ersten Seite 5 auf, die mit der Elektrowerkzeugmaschine 2 gekoppelt ist, und mit einer gegenüberliegenden zweiten Seite 6, die auf ein zu bearbeitendes Werkstück aufsetzbar ist. Durch einen von Hand bedienbaren Verstellmechanismus 7, kann ein Antriebsmotor 8, mit dem eine Werkzeugaufnahme 9 drehfest gekoppelt ist, gegenüber dem Magnetfuß 1 und einer damit verbundenen Elektronikeinheit 10 verstellt werden, wie mit dem Pfeil 25 angedeutet ist. Zur Befestigung der Elektrowerkzeugmaschine 2 auf einem Werkstück wird diese mit der zweiten Seite 6 des Magnetfußes 1 auf ein magnetisierbares Werkstück gestellt und der Magnetfuß 1 eingeschaltet. Hierzu sind in dem Grundkörper 4 des Magnetfußes 1 Magnetspulen 11 angeordnet, die jeweils einen Elektromagneten 12 bilden, wie nachstehend noch weiter anhand der einzelnen Ausführungsformen des Magnetfußes 1 erläutert wird.

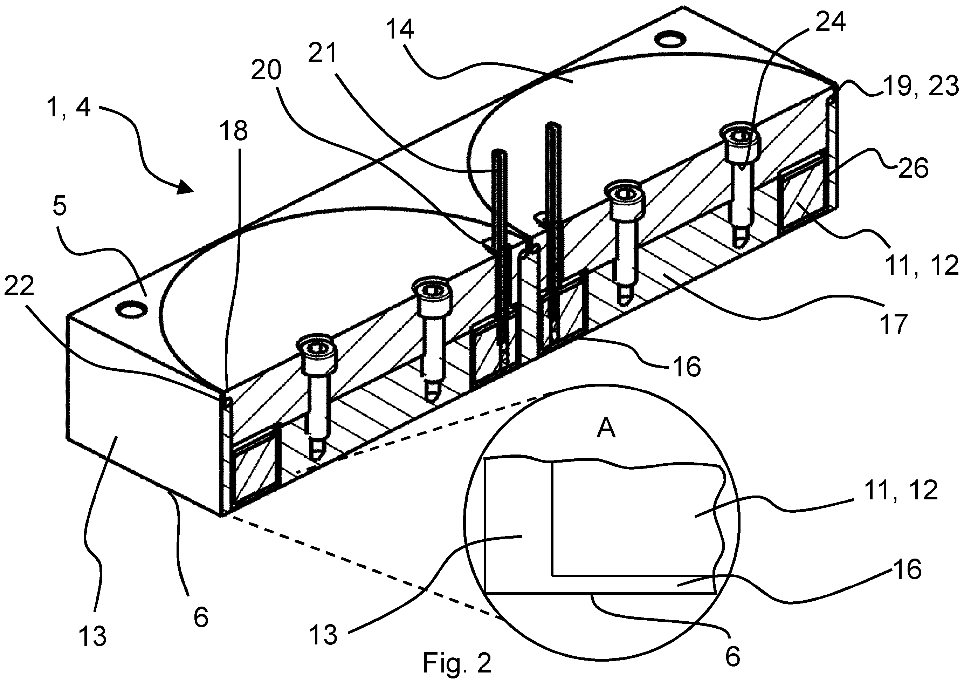

Figur 2 zeigt in einem Längsschnitt eine erste Ausführungsform des Magnetfußes 1. Hieraus wird ersichtlich, dass der Grundkörper 4 mehrteilig gebildet ist und einen Aufnahmekörper 13 und zwei Jochplatten 14 aufweist. In dem Aufnahmekörper 13 sind zwei Aufnahmeräume 15 ausgebildet, die von den Jochplatten 14 verschlossen sind und in denen jeweils eine der Magnetspulen 11 aufgenommen ist, die den Elektromagneten 12 bilden. Die Magnetkraft der Elektromagnete 12 ist zwischen einer maximalen resultierenden Haltekraft und einer minimalen resultierenden Haltekraft schaltbar, wodurch es dem Nutzer möglich ist, die mit dem Magnetfuß 1 verbundene Elektrowerkzeugmaschine 2 auf einem Werkstück sicher zu befestigen und von diesem bei Bedarf auch wieder zu lösen.

Der in dem Aufnahmekörper 13 ausgebildete Aufnahmeraum 15 ist dabei so gestaltet, dass ein Einsetzen der Magnetspule 11 nur von der ersten Seite 5 - also von der dem Werkstück abgewandten Seite - her möglich ist. Wie insbesondere dem Detail A, das in der Figur 2 dargestellt ist, zu entnehmen ist, ist der Aufnahmeraum 15 auf der zweiten Seite 6 durch einen durchgängigen Boden 16 begrenzt, der integral mit dem Grundkörper 4 bzw. mit dem Aufnahmekörper 13 gebildet ist. Dieser Boden 16 ist dabei jedoch so dünn ausgeführt, dass der dadurch resultierende magnetische Kurzschluss keinen signifikanten negativen Einfluss auf die resultierende Haltekraft des Magnetfußes 1 hat. In den gezeigten Ausführungsbeispielen beträgt die Dicke des Bodens 16 des Aufnahmeraums 15 genau 0,5 mm. Der Aufnahmeraum 15 weist einen ringförmigen Querschnitt auf, dessen Größe an die Größe der Magnetspule 11 angepasst ist, und umgibt ein zylinderförmiges Joch 17. Zur Definition der Lage des Elektromagneten 12 in dem Aufnahmeraum 15, aber auch zur elektrischen Isolierung des Elektromagneten 12 gegenüber dem Aufnahmekörper 13 bzw. gegenüber dem Grundkörper 4 des Magnetfußes 1 sind die Magnetspulen 11 in dem Aufnahmeraum 15 durch eine Vergussmasse 26 vergossen.

Wie bereits vorstehend geschildert, ist bei dem ersten Ausführungsbeispiel der Grundkörper 4 mehrteilig ausgeführt und weist den Aufnahmekörper 13, in dem der Aufnahmeraum 15 ausgebildet ist, und die Jochplatten 14 auf, die den Aufnahmeraum 15 zu der ersten Seite 5 hin abschließen. In dem gezeigten Ausführungsbeispiel sind insgesamt zwei Jochplatten 14 vorgesehen, die jeweils einen zylindrischen Querschnitt aufweisen und zusätzlich noch einen radialen Rand 18 besitzen, der in eine Aufnahmeschulter 19 eingreift, die in dem Aufnahmekörper 13 ausgebildet ist. Die Jochplatten 14 sind dabei durch Schrauben 24 an dem Aufnahmekörper 13 gesichert und zwar an dem Joch 17.

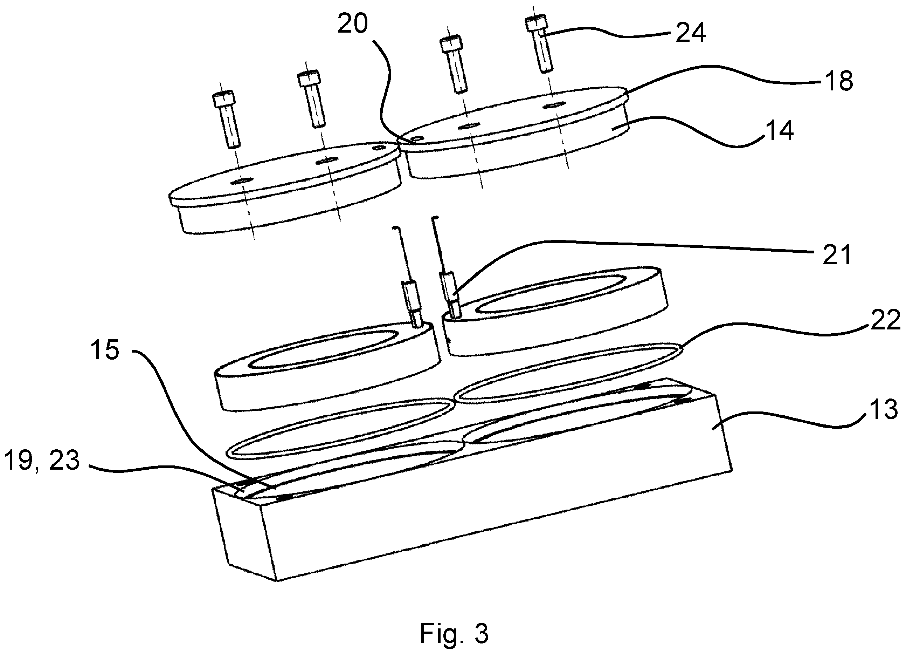

Die genaue Ausgestaltung der Jochplatten 14 wird insbesondere auch noch einmal aus der in der Figur 3 dargestellten Explosionsansicht der ersten Ausführungsform des Magnetfußes 1 deutlich. Aus dieser Figur wird auch ersichtlich, dass in den Jochplatten 14 Durchführungen 20 ausgebildet sind, die es ermöglichen, Anschlusskabel 21 von der Magnetspule 11 zu der auf der ersten Seite 5 des Magnetfußes 1 angeordneten Elektrowerkzeugmaschine 2 zu führen. Um ein Eindringen von Fremdkörpern und/oder Flüssigkeit in den Aufnahmeraum 15 zu vermeiden, ist zudem zwischen dem Aufnahmekörper 13 und den Jochplatten 14 jeweils ein Abdichtungselement 22 angeordnet, das in Nuten 23 eingesetzt wird, die in dem Grundkörper 4 ausgebildet sind und zwar in dem Aufnahmekörper 13 und/oder in den Jochplatten 14.

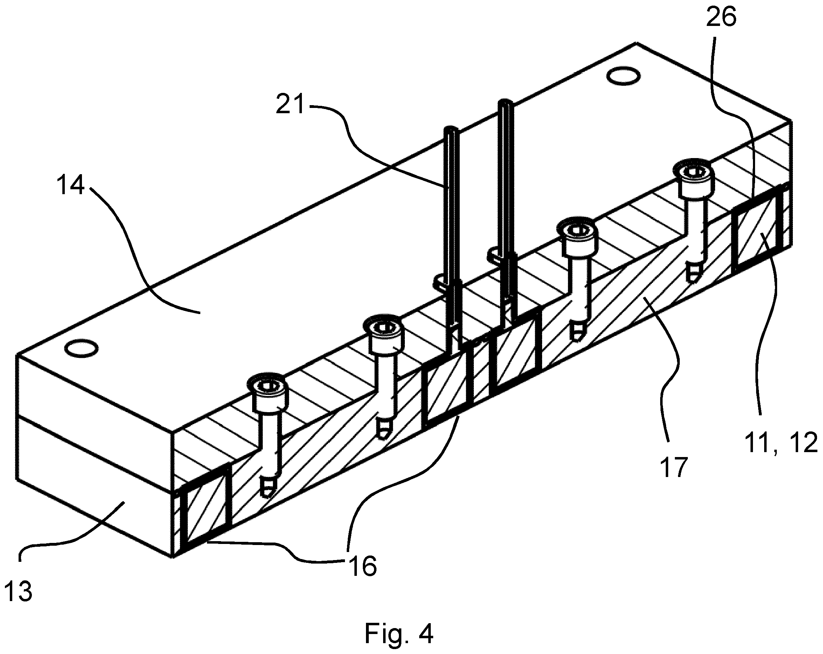

Figur 4 zeigt eine zweite Ausführungsform des erfindungsgemäßen Magnetfußes 1, bei der der Grundkörper 4 ebenfalls mehrteilig gebildet ist.

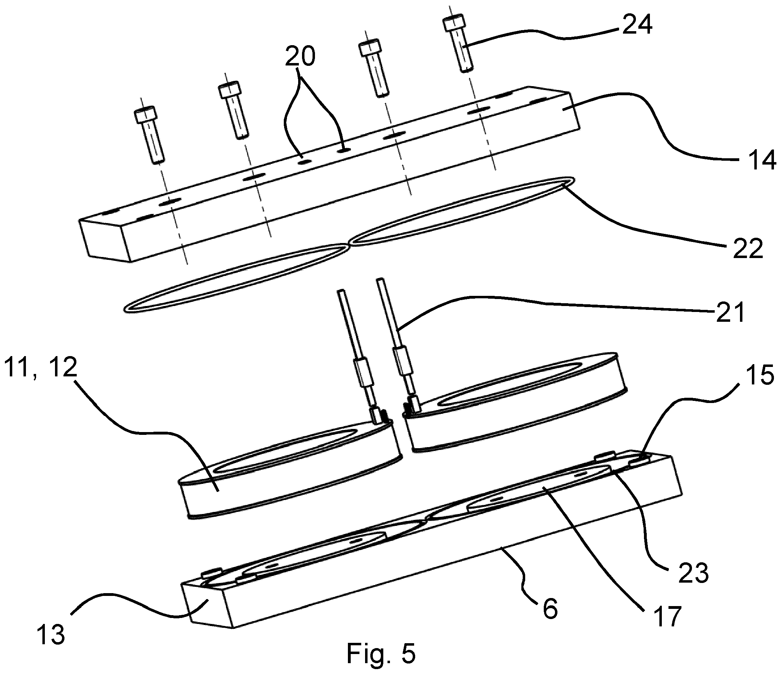

Im Unterschied zu der ersten Ausführungsform ist bei der zweiten Ausführungsform neben dem Aufnahmekörper 13 lediglich eine Jochplatte 14 vorgesehen, die in ihrer Breite und Länge im Wesentlichen der Breite und der Länge des Aufnahmekörpers 13 entspricht. Dies hat dabei insbesondere fertigungstechnische Vorteile, nämlich dahingehend, dass die Höhe des Ausgangsmaterials des Aufnahmekörpers 13 recht gering ausfallen kann und in dem Grundkörper 4 lediglich die Aufnahmeräume 15 für die Magnetspulen 11 herausgearbeitet werden müssen. Durch die Jochplatte 14, die mit dem Aufnahmekörper 13 durch Schrauben 24 verschraubt ist, lassen sich dann die Aufnahmeräume 15 abdecken. Der in der Figur 5 dargestellten Explosionsansicht des zweiten Ausführungsbeispiels lässt sich insbesondere auch entnehmen, dass in der der Jochplatte 14 zuweisenden Seite des Aufnahmekörpers 13 Nuten 23 ausgebildet sind, in die Abdichtungselemente 22 eingesetzt werden, um die Aufnahmeräume 15 gegenüber äußeren Einflüssen abzudichten.

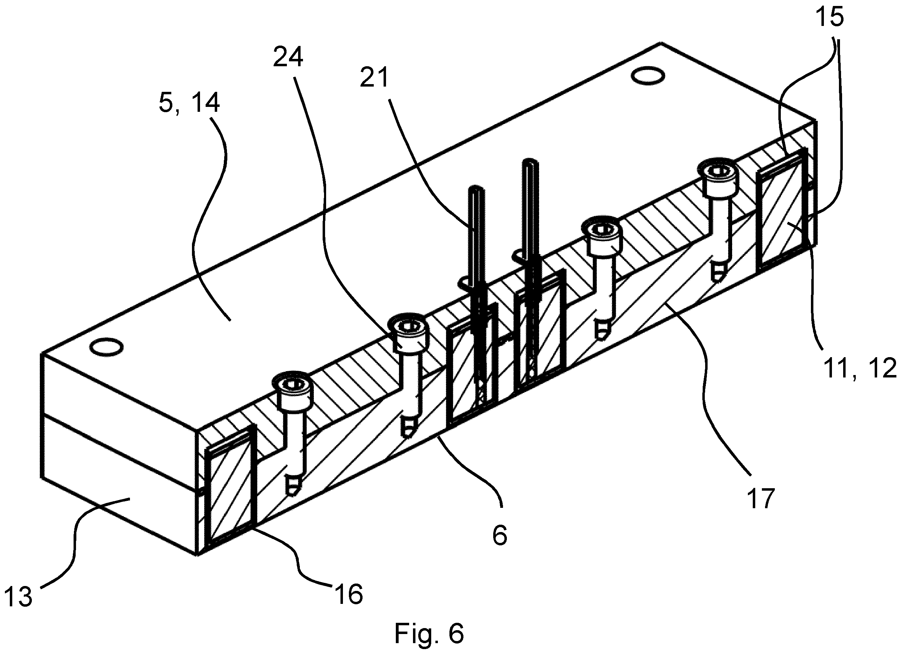

Eine dritte Ausführungsform des erfindungsgemäßen Magnetfußes 1 ist in der Figur 6 dargestellt. Bei dieser Ausführungsform ist der Aufnahmeraum 15 einerseits in dem Aufnahmekörper 13 und andererseits in der Jochplatte 14 ausgebildet. Dies hat den Vorteil, dass die Bauhöhe des Magnetfußes 1 weiter reduziert werden kann, was dadurch einen positiven Einfluss auf die Verwendungsmöglichkeit und den Einsatzzweck einer damit verbundenen Elektrowerkzeugmaschine 2 hat.

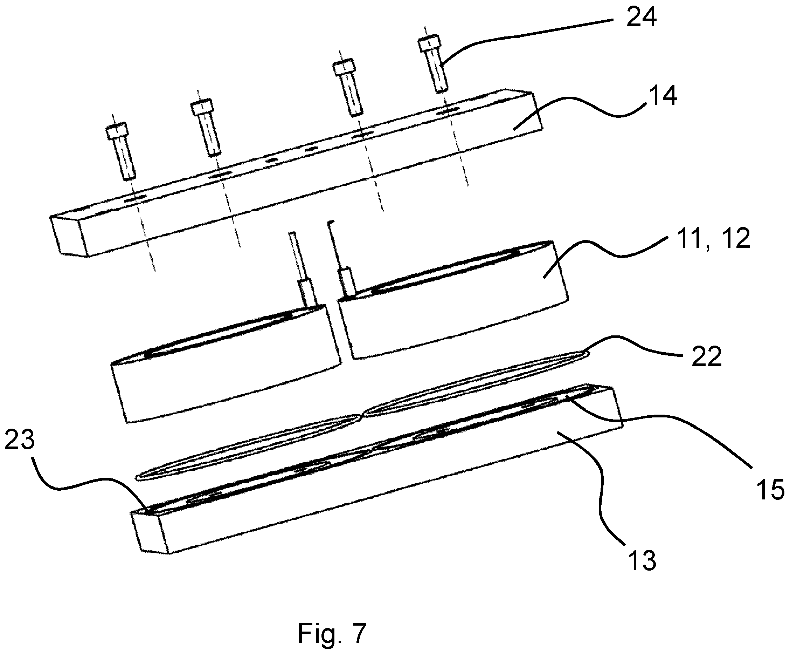

Der in der Figur 7 dargestellten Explosionsansicht lässt sich noch einmal entnehmen, dass die Höhe der in dem Magnetfuß 1 aufgenommenen Magnetspulen 11 höher ist als die Höhe des Aufnahmekörpers 13. Auch bei diesem Ausführungsbeispiel ist zwischen der Jochplatte 14 und dem Aufnahmekörper 13 Abdichtungselemente 22 angeordnet, die in einer in dem Aufnahmekörper 13 ausgebildeten Nut 23 aufgenommen sind. Zudem wird auch bei diesem Ausführungsbeispiel die Jochplatte 14 mit dem Grundkörper 4 über Schrauben 24 miteinander verbunden.

### Bezugszeichenliste

- 1: Magnetfuß
- 2: Elektrowerkzeugmaschine
- 3: Magnetkernbohrmaschine
- 4: Grundkörper
- 5: erste Seite
- 6: zweite Seite
- 7: Verstellmechanismus
- 8: Antriebsmotor
- 9: Werkzeugaufnahme
- 10: Elektronikeinheit
- 11: Magnetspule
- 12: Elektromagnet
- 13: Aufnahmekörper
- 14: Jochplatte
- 15: Aufnahmeraum
- 16: Boden
- 17: Joch
- 18: Rand
- 19: Aufnahmeschulter
- 20: Durchführung
- 21: Anschlusskabel
- 22: Abdichtungselement
- 23: Nut
- 24: Schraube
- 25: Pfeil
- 26: Vergussmasse

## Patentansprüche

1. Magnetfuß (1) für eine Elektrowerkzeugmaschine (2), insbesondere für eine Magnetkernbohrmaschine (3), mit einem Grundkörper (4), in dem in einem Aufnahmeraum (15) mindestens eine einen Elektromagneten (12) bildende erste Magnetspule (11) aufgenommen ist, deren Magnetkraft zwischen einer maximalen resultierenden Haltekraft und einer minimalen resultierenden Haltekraft schaltbar ist, wobei der Grundkörper (4) eine erste Seite (5), die mit der Elektrowerkzeugmaschine (2) koppelbar ist, und eine gegenüberliegende zweite Seite (6) aufweist, die auf ein zu bearbeitendes Werkstück aufsetzbar ist, wobei der Aufnahmeraum (15) derartig gestaltet ist, dass ein Einsetzen der mindestens einen Magnetspule (11) in den Aufnahmeraum (15) nur von der ersten Seite (5) her möglich ist und der Aufnahmeraum (15) auf der zweiten Seite (6) durch einen Boden (16) begrenzt ist, der integral mit dem Grundkörper (4) gebildet ist, **dadurch gekennzeichnet, dass** die Dicke des Bodens (16) des Aufnahmeraums (15) 0,2 mm oder mehr beträgt, und weniger als 0,8 mm beträgt oder 0,8 mm beträgt

2. Magnetfuß (1) nach Anspruch 1, **dadurch gekennzeichnet, dass** die Dicke des Bodens (16) des Aufnahmeraums (15) 0,3 mm oder mehr und besonders bevorzugt 0,4 mm oder mehr, und weiter bevorzugt 0,7 mm oder weniger und besonders bevorzugt 0,6 mm oder weniger und ganz besonders bevorzugt 0,5 mm beträgt.

3. Magnetfuß (1) nach einem der Ansprüche 1 bis 2, **dadurch gekennzeichnet, dass** der Aufnahmeraum (15) einen ringförmigen Querschnitt aufweist.

4. Magnetfuß (1) nach einem der Ansprüche 1 bis 3, **dadurch gekennzeichnet, dass** der Aufnahmeraum (15) ein zylinderförmiges Joch (17) umgibt.

5. Magnetfuß (1) nach einem der Ansprüche 1 bis 4, **dadurch gekennzeichnet, dass** der Grundkörper (4) mehrteilig gebildet ist und einen Aufnahmekörper (13), in dem der Aufnahmeraum (15) ausgebildet, und eine Jochplatte (14) aufweist, die den Aufnahmeraum (15) zu der ersten Seite (5) hin abschließt.

6. Magnetfuß (1) nach einem Anspruche 5, **dadurch gekennzeichnet, dass** zwischen dem Aufnahmekörper (13) und der Jochplatte (14) ein Abdichtungselement (22) vorgesehen ist.

7. Magnetfuß (1) nach Anspruch 5 oder 6, **dadurch gekennzeichnet, dass** die Breite und/oder die Länge der Jochplatte (14) im Wesentlichen der Breite und/oder der Länge des Grundkörpers (4) entspricht.

8. Magnetfuß (1) nach einem der Ansprüche 5 bis 7, **dadurch gekennzeichnet, dass** in der Jochplatte (14) Durchführungen (20) ausgebildet sind.

9. Magnetfuß (1) nach einem der Ansprüche 1 bis 8, **dadurch gekennzeichnet, dass** die mindestens eine Magnetspule (11) in dem Aufnahmeraum (15) vergossen ist.

10. Magnetfuß (1) nach einem der Ansprüche 1 bis 9, **dadurch gekennzeichnet, dass** die mindestens eine Magnetspule (11) mehrfach, besonders bevorzugt zweifach vorgesehen ist.

11. Elektrowerkzeugmaschine (2) mit einem Magnetfuß (1) nach einem der Ansprüche 1 bis 10.

## Claims

1. Magnetic base (1) for a power tool (2), in particular for a magnetic core drilling machine (3), having a base body (4) in which at least one first magnetic coil (11) forming an electromagnet (12) is accommodated in a receiving space (15), the magnetic force of which coil is switchable between a maximum resulting holding force and a minimum resulting holding force, the base body (4) comprising a first side (5), which can be coupled to the power tool (2), and an opposite second side (6), which can be placed on a workpiece to be machined, the receiving space (15) is configured in such a way that insertion of the at least one magnetic coil (11) into the receiving space is possible, which can be placed on a workpiece to be machined, the receiving space (15) being configured in such a way that insertion of the at least one magnetic coil (11) into the receiving space (15) is only possible from the first side (5) and the receiving space (15) on the second side (6) is delimited by a bottom (16), which is formed integrally with the base body (4), **characterized in that** the thickness of the bottom (16) of the receiving space (15) is 0.2 mm or more, and is less than 0.8 mm or is 0.8 mm.

2. Magnetic base (1) according to claim 1, **characterized in that** the thickness of the bottom (16) of the receiving space (15) is 0.3 mm or more and particularly preferably 0.4 mm or more, and further preferably 0.7 mm or less and particularly preferably 0.6 mm or less and very particularly preferably 0.5 mm.

3. Magnetic base (1) according to any one of claims 1 to 2, **characterized in that** the receiving space (15) comprises an annular cross-section.

4. Magnetic base (1) according to any one of claims 1 to 3, **characterized in that** the receiving space (15) surrounds a cylindrical yoke (17).

5. Magnetic base (1) according to any one of claims 1 to 4, **characterized in that** the base body (4) is formed in several parts and comprises a receiving body (13), in which the receiving space (15) is formed, and a yoke plate (14), which closes off the receiving space (15) towards the first side (5).

6. Magnetic base (1) according to claim 5, **characterized in that** a sealing element (22) is provided between the receiving body (13) and the yoke plate (14).

7. Magnetic base (1) according to any of claim 5 or 6, **characterized in that** the width and/or the length of the yoke plate (14) essentially corresponds to the width and/or the length of the base body (4).

8. Magnetic base (1) according to any one of claims 5 to 7, **characterized in that** lead-throughs (20) are formed in the yoke plate (14).

9. Magnetic base (1) according to one of claims 1 to 8, **characterized in that** the at least one magnetic coil (11) is encapsulated in the receiving space (15).

10. Magnetic base (1) according to any one of claims 1 to 9, **characterized in that** the at least one magnetic coil (11) is provided several times, particularly preferably twice.

11. Power tool (2) with a magnetic base (1) according to any one of claims 1 to 10.

## Revendications

1. Pied magnétique (1) pour une machine-outil électrique (2), en particulier pour une perceuse à noyau magnétique (3), avec un corps de base (4), dans lequel au moins une première bobine magnétique (11) formant un électroaimant (12) est reçue dans un espace de réception (15), dont la force magnétique peut basculer entre une force de retenue résultante maximale et une force de retenue résultante minimale, dans lequel le corps de base (4) présente une première face (5), qui peut être accouplée à la machine-outil électrique (2), et une deuxième face (6) opposée, qui peut être posée sur une pièce à usiner, dans lequel l'espace de réception (15) est conçu de telle sorte qu'une insertion de l'au moins une bobine magnétique (11) dans l'espace de réception (15) n'est possible qu'à partir de la première face (5) et l'espace de réception (15) est délimité sur la deuxième face (6) par un fond (16), qui est formé d'un seul tenant avec le corps de base (4), **caractérisé en ce que** l'épaisseur du fond (16) de l'espace de réception (15) est supérieure ou égale à 0,2 mm, et est inférieure à 0,8 mm ou est égale à 0,8 mm.

2. Pied magnétique (1) selon la revendication 1, **caractérisé en ce que** l'épaisseur du fond (16) de l'espace de réception (15) est supérieure ou égale à 0,3 mm et de manière particulièrement préférée supérieure ou égale à 0,4 mm, et plus préférablement inférieure ou égale à 0,7 mm et de manière particulièrement préférée inférieure ou égale à 0,6 mm et idéalement est égale à 0,5 mm.

3. Pied magnétique (1) selon l'une quelconque des revendications 1 à 2, **caractérisé en ce que** l'espace de réception (15) présente une section transversale annulaire.

4. Pied magnétique (1) selon l'une quelconque des revendications 1 à 3, **caractérisé en ce que** l'espace de réception (15) entoure une culasse cylindrique (17).

5. Pied magnétique (1) selon l'une quelconque des revendications 1 à 4, **caractérisé en ce que** le corps de base (4) est formé en plusieurs parties et présente un corps de réception (13), dans lequel l'espace de réception (15) est réalisé, et une plaque de culasse (14), qui ferme l'espace de réception (15) en direction de la première face (5).

6. Pied magnétique (1) selon la revendication 5, **caractérisé en ce qu'**un élément d'étanchéité (22) est prévu entre le corps de réception (13) et la plaque de culasse (14).

7. Pied magnétique (1) selon la revendication 5 ou 6, **caractérisé en ce que** la largeur et/ou la longueur de la plaque de culasse (14) correspond sensiblement à la largeur et/ou la longueur du corps de base (4).

8. Pied magnétique (1) selon l'une quelconque des revendications 5 à 7, **caractérisé en ce que** des passages (20) sont réalisés dans la plaque de culasse (14).

9. Pied magnétique (1) selon l'une quelconque des revendications 1 à 8, **caractérisé en ce que** l'au moins une bobine magnétique (11) est coulée dans l'espace de réception (15).

10. Pied magnétique (1) selon l'une quelconque des revendications 1 à 9, **caractérisé en ce que** l'au moins une bobine magnétique (11) est prévue de façon multiple, de manière particulièrement préférée de façon double.

11. Machine-outil électrique (2) avec un pied magnétique (1) selon l'une quelconque des revendications 1 à 10.
